# DEMANDE DE BREVET EUROPEEN

(11) **EP 0 731 551 A1**
(43) Date de publication de la demande: **11.09.1996**
(21) Numéro de dépôt: 96102899.0
(22) Date de dépôt: 27.02.1996
(51) Int. Cl.: H02K 5/22

(54) **Moteur électrique**

(30) Priorité: 08.03.1995 EP 95103361
(71) Demandeur: KSB Aktiengesellschaft, D-67227 Frankenthal (DE)
(72) Inventeur: Mabillot, Christian, 36000 Chateauroux (FR); Maubert, Michel, 36230 St. Denis de Jouet (FR)

(57) **Abrégé**

La présente invention concerne un moteur électrique 5, comprenant un corps 6, un arbre , une pièce de palier 1 pour guider en rotation l'arbre, un système électrique de branchement 30,31 et des composants électriques de fonctionnement de moteur 32 à 34, notamment un moteur électrique d'une pompe.

Aujourd'hui on réalise le branchement d'un moteur électrique 5 d'une pompe au réseau à travers d'un boîtier électrique fixé sur le corps 6 du moteur 5 et comprenant les composants électriques nécessaires au fonctionnement de celui-ci. En général, le branchement des composants électrique à l'intérieur du boîter électrique se fait par fils internes.

Le moteur électrique est caractérisé en ce que la pièce de palier 1 est en matériau électriquement isolant et reçoit une platine 20 en matériau conducteur assurant la continuité électrique nécessaire au fonctionnement électrique du moteur 5 et ses composants 30, 31, 32 à 34.

## Description

### Domaine technique

La présente invention concerne un moteur électrique, comprenant un corps, un arbre, une pièce de palier pour guider en rotation l'arbre, un système électrique de branchement et des composants électriques de fonctionnement de moteur, notamment un moteur électrique d'une pompe.

### État de la technique

Aujourd'hui on réalise le branchement d'un moteur électrique d'une pompe au réseau à travers d'un boîtier électrique fixé sur le corps du moteur et comprenant les composants électriques nécessaires au fonctionnement de celui-ci, p. ex. interrupteur, condensateur, protection thermique et connecteur du cable. En général, le branchement des composants électrique à l'intérieur du boîter électrique se fait par fils internes.

Tout l'arrangement est d'un grand encombrement et nécessite une mise en place compliquée de tous les fils internes nécessaires au branchement à l'intérieur d'un boîtier électrique de moteur.

Le but de l'invention est de simplifier la construction du moteur et la mise en place des branchements électriques internes.

### Exposé de l'invention

Le moteur électrique selon l'invention est caractérisé en ce que la pièce de palier est en matériau électriquement isolant et reçoit une platine en matériau conducteur assurant la continuité électrique nécessaire au fonctionnement électrique du moteur et ses composants.

Grâce à cette platine reçue dans la pièce de palier en matériau électriquement isolant on est capable de remplacer tous les fils internes nécessaires au branchement des composants électriques à l'intérieur d'un boîtier électrique de moteur par une connexion directe à travers la platine. De cette manière, on supprime un support des pistes conductives et on obtient un relativement petit encombrement.

L'assemblage d'un tel moteur est considérablement simplifié en limitant le nombre des opérations de montage. La fiabilité augmente par la diminution du nombre des opérations. En même temps la partie alimentation éléctrique est simplifiée, surtout les raccordements internes.

De préférence, la platine est monobloc. Cela a l'avantage, qu'au niveau du montage il n'y a qu'une seule manipulation remplaçant plusieures manipulations plus le branchement de fils électriques pour la connexion des composants électriques.

Pour simplifier et améliorer la mise en place, la platine dispose dans un autre mode de réalisation des parties pliées formant des cosses pour recevoir des composants électriques. Cela rend superflu un soudage des composants électriques, qui peuvent être fichés directement dans les cosses et qui y sont tenus par serrage.

Dans un autre mode de réalisation la pièce de palier dispose des ouvertures pour recevoir des parties pliées de la platine. De préférence, la platine est fixé sur la pièce de palier par clipsage des parties pliées.

Un autre mode de réalisation est de fixer la platine sur la pièce de palier par clipsage ou surmoulage supplémentaire.

La mise à la terre intégrée à la platine ira avantageusement chercher directement une partie métallique du moteur, soit le stator ou la carcasse.

### Présentation des différentes figures

Les dessins en annexe illustrent l'invention:
- La fig. 1: représente en coupe axiale selon la ligne BB de la fig. 3 la pièce de palier,
- la fig. 2: représente un détail de la fig. 1 en vue frontale,
- la fig. 3: représente en vue d'en haut la pièce de palier,
- la fig. 4: représente une coupe selon la ligne AA de la fig. 3 de la pièce de palier,
- la fig. 5: représente en vue d'en haut la platine non-déformée,
- la fig. 6: représente en vue d'en haut la platine déformée,
- la fig. 7: représente en vue latérale des formes différentes de cosses possibles,
- la fig. 8: représente en coupe axiale une ensemble selon l'invention montée.

### Modes de réalisation

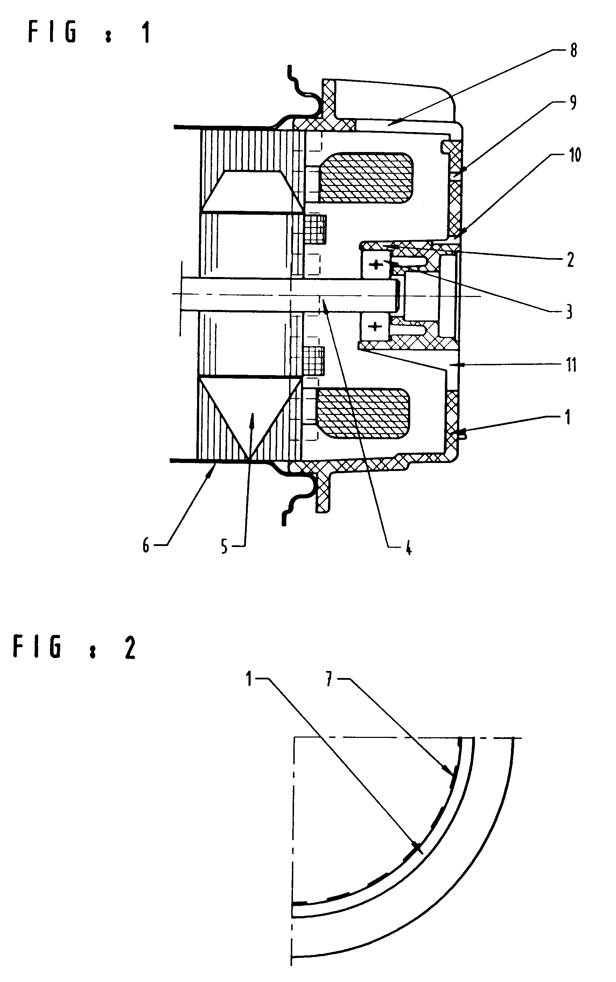

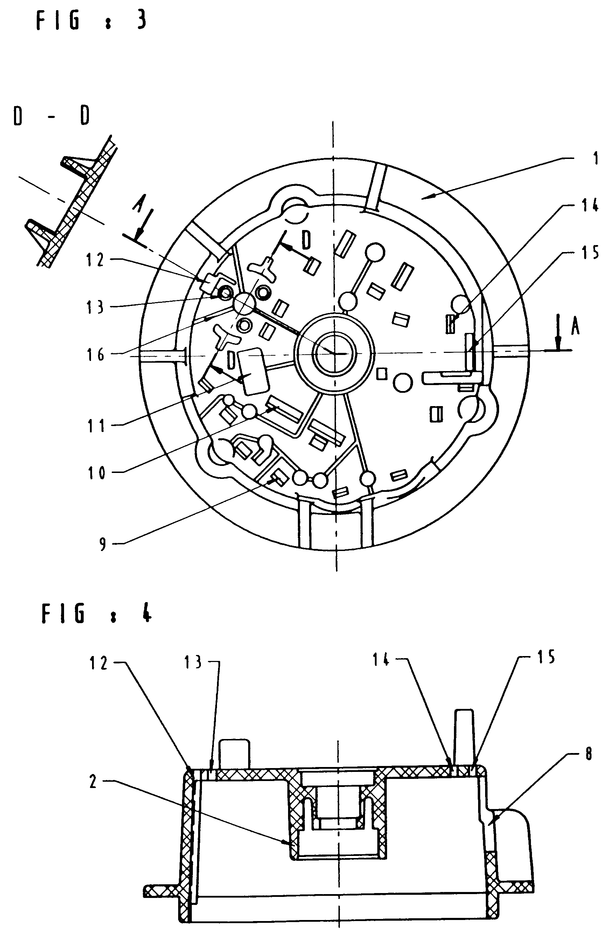

En référence à la fig. 1 des dessins, la pièce de palier 1 comprend un logement 2 pour recevoir un coussinet ou un roulement 3 dans le but de guider en rotation un arbre 4 d'un moteur 5 muni d'un corps 6. La pièce de palier 1 est en matériau isolant, thermoplastique ou thermodurcissable ou autre et dispose sur son côté orienté vers le moteur d'une sorte d'engrenage 7 pour assurer la tenue par serrage sur le corps 6 du moteur 5 (fig. 2).

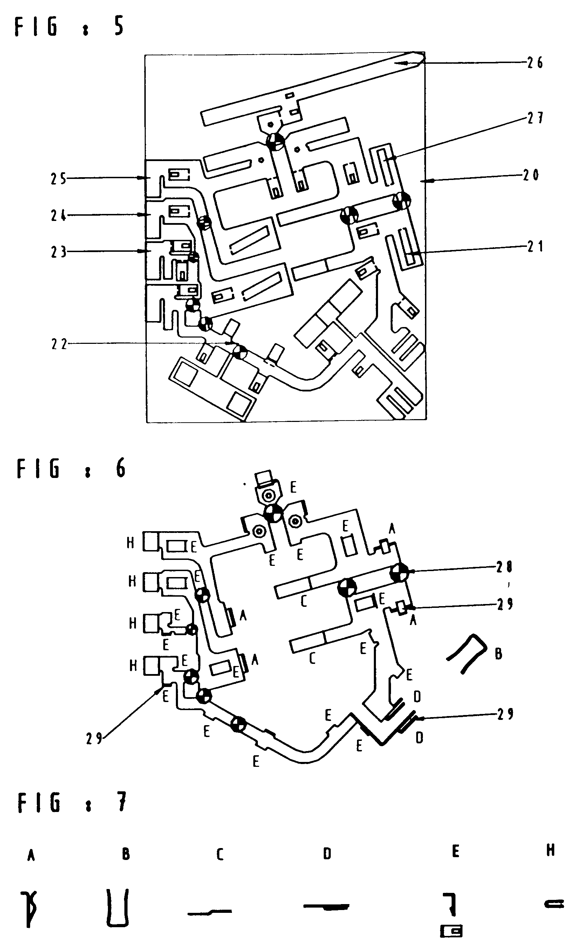

Pour recevoir une platine (fig. 5), la pièce de palier 1 est munie des ouvertures différetes 8 à 11, représentées également dans la fig. 3 le long de la ligne de la coupe BB. Les ouvertures 9, 10 servent à clipser ladite platine. L'ouverture 8 est prévue pour alléger la pièce de palier 1 et l'overture 11 assure le passage d'un composant électrique comme un protecteur thermique.

Le long de la ligne de la coupe AA de la fig. 3 sont représentées autres ouvertures 12 à 15. L'ouverture 12 sert à guider une patte plieée de ladite platine, l'ouverture 13 sert à recevoir une broche d'un composant électrique comme un connecteur de cable embrochable et les ouvertures 14, 15 servent également à clipser la dite platine. Des nervures 16 sont prévues pour assurer l'isolation électrique entre des pistes même dans le cas de présence d'humidité dans le boîtier électrique.

Pour guider un composant électrique comme un connecteur du cable afin de brocher sans difficulté le détail DD montre des nervures.

On retrouve les ouvertures 12 à 15 dans la fig. 4 et le logement 2 représenté sans roulement et arbre.

Dans la fig. 5 on trouve une platine 20 monobloc en matériau conducteur comme laiton étamé, dont les pistes différentes 21 à 27 sont reliées les unes aux autres par des ponts 28. La forme des pistes 21 à 27 est définée de telle sorte, que la continuité électrique nécessaire au fonctionnement électrique du moteur 5 et des composants électriques et assurée sans liaison par fil électrique.

En même temps il est possible de prévoir sur les pistes 21 à 27 des parties 29 servant à être plier pour former des cosses A à E, H comme représentées dans la fig. 6 et 7 pour recevoir des broches des composants électriques.

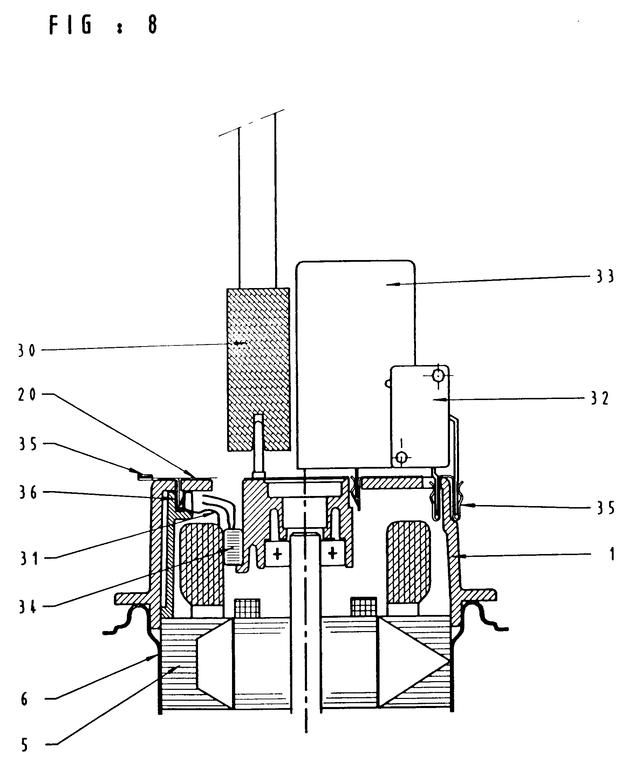

Dans la fig. 8 est représentée une ensemble de pièce de palier 1, moteur 5, corps 6, platine 20 et des connexions 30 à 34. D'une part sur la platine 20, à l'entrée électrique, est prévu un connecteur cable 30, à la sortie des fils du moteur 31 soudés par résistance sur des cosses 35 intégrées à la platine 20 et réalisées par pliage. Ces cosses 35 pourraient être d'un autre système du style d'un contact auto-dénudant sans soudure, qui pourrait être intégré à la platine 20 ou la platine 20 venait se brocher sur une pièce intégrant ces contacts.

La platine 20 est fixé sur la pièce de palier 1 par clipsage ou surmoulage supplémentaire 36.

En plus, on trouve des composants électriques nécessaires au fonctionnement électrique du moteur 5, par exemple un interrupteur 32, un condensateur 33 et une protection thermique 34.

Après la mise en place, les pistes 21 à 27 sous tension reliées entre-elles sont ensuite isolées par découpage des ponts 28.

La mise à la terre intégrée à la platine 20 cherche directement une partie métallique du moteur 5, soit un stator ou une carcasse.

### Application industrielle

Le moteur selon l'invention est particulièrement qualifié pour l'entraînement d'une pompe, qu'elle soit submersible ou de surface, verticale ou horizontale.

## Revendications

1. Moteur électrique, comprenant un corps (6), un arbre (4), une pièce de palier (1) pour guider en rotation l'arbre (4), un système électrique de branchement (30) et des composants électriques de fonctionnement de moteur (32 à 34), **caractérisé en ce que** la pièce de palier (1) est en matériau électriquement isolant et reçoit une platine (20) en matériau conducteur assurant la continuité électrique nécessaire au fonctionnement électrique du moteur (5) et ses composants (30, 31, 32 à 34).

2. Moteur électrique selon la revendication 1, caracterisé en ce que la platine (20) est monobloc.

3. Moteur électrique selon la revendication 1 ou 2, caracterisé en ce que la platine (20) dispose des parties pliées (29) formant des cosses (A à E, H) pour recevoir des composants électriques (30, 31, 32 à 34).

4. Moteur électrique selon l'une quelconque des revendications précédentes, caracterisé en ce que la pièce de palier (1) dispose des ouvertures (8 à 11, 12 à 15) pour recevoir des parties pliées (29) de la platine.

5. Moteur électrique selon la revendication 4, caracterisé en ce que la platine (20) est fixé sur la pièce de palier (1) par clipsage des parties pliées (29).

6. Moteur électrique selon l'une quelconque des revendications précédentes, caracterisé en ce que la platine (20) est fixé sur la pièce de palier (1) par clipsage ou surmoulage supplémentaire (36).

7. Moteur électrique selon l'une quelconque des revendications précédentes, caracterisé en ce que la mise à la terre intégrée à la platine (20) cherche directement une partie métallique du moteur (5), soit un stator ou une carcasse.
